(19)

Europäisches
Patentamt
European
Patent Office
Office européen
des brevets

(11) **EP 4 472 198 A1**

(12) **EUROPEAN PATENT APPLICATION**
published in accordance with Art. 153(4) EPC

(43) Date of publication:
**04.12.2024 Bulletin 2024/49**

(21) Application number: **23795257.7**

(22) Date of filing: **23.04.2023**

(51) International Patent Classification (IPC):
*H04N 19/136* (2014.01)   *H04N 13/161* (2018.01)

(52) Cooperative Patent Classification (CPC):
**H04N 13/161; H04N 19/13; H04N 19/136;
H04N 19/85; H04N 19/91**

(86) International application number:
**PCT/CN2023/090000**

(87) International publication number:
**WO 2023/207824 (02.11.2023 Gazette 2023/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **26.04.2022 CN 202210451656**

(71) Applicants:
• **ZTE Corporation
Shenzhen, Guangdong 518057 (CN)**
• **Sun Yat-Sen University
Guangzhou, Guangdong 510275 (CN)**

(72) Inventors:
• **LIANG, Fan
Shenzhen, Guangdong 510275 (CN)**

• **HE, Jian
Shenzhen, Guangdong 518057 (CN)**
• **LIU, Yi
Shenzhen, Guangdong 518057 (CN)**
• **HUANG, Ruishan
Shenzhen, Guangdong 518057 (CN)**
• **GAO, Ying
Shenzhen, Guangdong 518057 (CN)**
• **WU, Ping
Shenzhen, Guangdong 518057 (CN)**
• **XIE, Shaowei
Shenzhen, Guangdong 518057 (CN)**

(74) Representative: **Iannone, Carlo Luigi et al
Barzanò & Zanardo Milano S.p.A.
Via Borgonuovo, 10
20121 Milano (IT)**

(54) **ENCODING METHOD, DECODING METHOD, AND COMMUNICATION NODE AND STORAGE MEDIUM**

(57)    Provided are a coding method, a decoding method, a communication node, and a storage medium. The method includes determining to-be-coded attribute data of attribute information of a point cloud; determining a coding order of a current point in the point cloud; coding to-be-coded attribute data of the current point according to the coding order; and continuing to determine a coding order of a next current point in the point cloud, and coding to-be-coded attribute data of the next current point until all points in the point cloud are coded to obtain coded attribute data.

Determine to-be-coded attribute data of attribute information of a point cloud — 110

Determine a coding order of a current point in the point cloud — 120

Code to-be-coded attribute data of the current point according to the coding order — 130

Continue to determine a coding order of a next current point in the point cloud, and code to-be-coded attribute data of the next current point until all points in the point cloud are coded to obtain coded attribute data — 140

**FIG. 2**

EP 4 472 198 A1

## Description

TECHNICAL FIELD

The present application relates to the field of communication technology, for example, a coding method, a decoding method, a communication node, and a storage medium.

BACKGROUND

A point cloud is formed by a set of discrete points that are randomly distributed in space and express the spatial structure and surface properties of a three-dimensional object or scenario.

At present, the point cloud compression algorithm has been studied systematically. The order of the exponential-Golomb coding used in the entropy coding of the geometry-based point cloud compression algorithm is fixed. The exponential-Golomb coding of the fixed order has lower coding performance in some scenarios.

SUMMARY

The present application provides a coding method, a decoding method, a communication node, and a storage medium.

An embodiment of the present application provides a coding method. The method includes the following:
To-be-coded attribute data of attribute information of a point cloud is determined.

A coding order of a current point in the point cloud is determined.

The to-be-coded attribute data of the current point is coded according to the coding order.

It is continued to determine a coding order of a next current point in the point cloud, and to-be-coded attribute data of the next current point is coded until all points in the point cloud are coded to obtain coded attribute data.

An embodiment of the present application further provides a decoding method. The method includes the following:

Coded attribute data of a point cloud is acquired.

Coded attribute data of a current point in the point cloud is acquired.

A coding order corresponding to the coded attribute data of the current point is determined.

The coded attribute data of the current point is decoded based on the coding order to obtain attribute data of the current point.

It is continued to determine attribute data of a next current point in the point cloud until all points in the point cloud are decoded.

An embodiment of the present application further provides a communication node. The communication node includes a memory, a processor, and a computer program stored in the memory and executable by the processor, and the processor, when executing the program, performs the preceding coding method or decoding method.

An embodiment of the present application further provides a computer-readable storage medium storing a computer program which, when executed by a processor, causes the processor to perform the preceding coding method or decoding method.

The preceding embodiments and other aspects of the present application and implementations thereof are described in more detail in the brief description of drawings, detailed description, and claims.

BRIEF DESCRIPTION OF DRAWINGS

FIG. 1 is a schematic diagram illustrating the implementation of a point cloud compression of audio video coding standard (AVS-PCC) framework according to an embodiment.

FIG. 2 is a flowchart of a coding method according to an embodiment.

FIG. 3 is a schematic diagram illustrating the implementation of a point cloud entropy coding method according to an embodiment.

FIG. 4 is a schematic diagram illustrating the implementation of another point cloud entropy coding method according to an embodiment.

FIG. 5 is a schematic diagram illustrating the implementation of another point cloud entropy coding method according to an embodiment.

FIG. 6 is a flowchart of a decoding method according to an embodiment.

FIG. 7 is a schematic diagram illustrating the implementation of a point cloud entropy decoding method according to an embodiment.

FIG. 8 is a structural diagram of a coding apparatus according to an embodiment.

FIG. 9 is a structural diagram of a decoding apparatus according to an embodiment.

FIG. 10 is a structural diagram of the hardware of a communication node according to an embodiment.

DETAILED DESCRIPTION

The steps illustrated in the flowcharts among the drawings may be performed by, for example, a computer system capable of executing a set of computer-executable instructions. Moreover, although logical sequences are illustrated in the flowcharts, the steps illustrated or described may be performed in sequences different from those described herein in some cases.

A point cloud is formed by a set of discrete points that are randomly distributed in space and express the spatial structure and surface properties of a three-dimensional object or scenario. In addition to geometric coordinates, the points in the point cloud further include some additional attributes, such as colors and reflectance. After the spatial coordinates of each sampling point on the object surface are acquired, a set of points is obtained and is referred to as a "point cloud". The point cloud is applicable to the fields such as surveying and mapping, car driving, agriculture, planning and design, archeology and cultural relics protection, medical care, and gaming and entertainment. As three-dimensional scanning technology and systems grow increasingly mature, point cloud data based on three-dimensional coordinate information on the surface of an actual object can be quickly and precisely acquired and stored so that the point cloud data can be gradually widely applied in various image processing fields. According to different acquisition methods, the point cloud data may be divided into the following: 1, the point cloud obtained according to the principle of laser measurement, including three-dimensional coordinates (XYZ) and laser reflectance; 2, the point cloud obtained according to the principle of photogrammetry, including three-dimensional coordinates (XYZ) and color information (that is, Red-Green-Blue (RGB)); and 3, the point cloud obtained in conjunction with the principles of laser measurement and photogrammetry, including three-dimensional coordinates (XYZ), laser reflectance, and color information (RGB). Regardless of the acquisition method, the amount of point cloud data after scanning reaches several million bits or even more. Therefore, to reduce the storage and transmission amount of the point cloud data, the coding and compression algorithm for the point cloud data is one of the important technologies.

Currently, the compression algorithm of the point cloud has been studied systematically, which may be divided into video-based point cloud coding (V-PCC) and geometry-based point cloud coding (G-PCC). The geometry-based point cloud coding (G-PCC) is mainly applied to the static point cloud (that is, the object is stationary and the device acquiring the point cloud is also stationary) and the dynamically acquired point cloud (that is, the object is in motion, and the device acquiring the point cloud is in motion). In the compression method for the G-PCC, the point cloud data is generally converted into geometric information, attribute information, and the like, and then the geometric information and the attribute information are coded into code streams respectively, where the geometric information refers to the position information of the point, the octree or k-dimensional (KD) tree of the three-dimensional coordinates, or other descriptions, and the attribute information refers to multiple different components such as the color and reflectance of the point.

The attribute information coding may be mainly divided into three categories: a transformation-based method, a mapping-based method, and a prediction-based method. In the transformation-based method, attribute information transformation is designed using reconstructed geometric information to remove a correlation between attribute information. In the mapping-based method, the same projection method as the mapping-based geometric coding method is used, and then a recolored attribute video is coded using the video coding technology. In the prediction-based method, current attribute information is predicted using existing attribute information, and coding cost of the current attribute information is reduced.

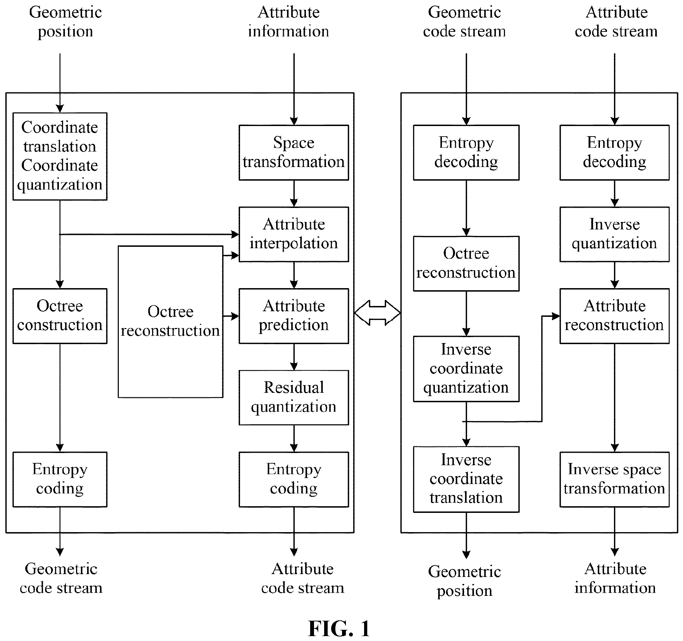

FIG. 1 is a schematic diagram illustrating the implementation of an AVS-PCC framework according to an embodiment. As shown in FIG. 1, FIG. 1 is the overall block diagram of the encoder and decoder in the AVS-PCC framework. The figure shows the logical relationships between modules. In the encoder and decoder, the point cloud geometric position is first processed, and then the attribute information is processed based on the decoded geometric position.

In this embodiment, the compression process of attribute information of a point cloud in the AVS-PCC framework may be as follows: since coordinate translation, quantization, and octree reconstruction are performed on the geometric position of the point cloud, attribute interpolation and recoloring operations need to be performed on each point in the point cloud. To further compress the data, the differential prediction method is used to obtain a predicted attribute value of the current point through several previous points, further obtain an attribute prediction residual by subtracting the current attribute value from the predicted attribute value, and then perform quantization and entropy coding on the attribute prediction residual.

However, in the current entropy coding of the AVS-PCC, the used order of exponential-Golomb coding is fixed. When the attribute information is the reflectance, third-order exponential-Golomb coding is used. When the attribute information is the color, first-order exponential-Golomb coding is used.

In the face of different data sets and test conditions, the ranges of generated non-zero attribute coding sequence values are quite different. During traversal of all points, when the local texture is relatively smooth, the attribute coding sequence value is relatively small; and when the local texture has a relatively large mutation, the attribute coding sequence value is relatively large. In the local texture of the point cloud, the change in luminance Y is relatively large while the changes in chromas U and V are relatively small. In view of the preceding cases, the coding performance of fixed-order exponential-Golomb coding is poor.

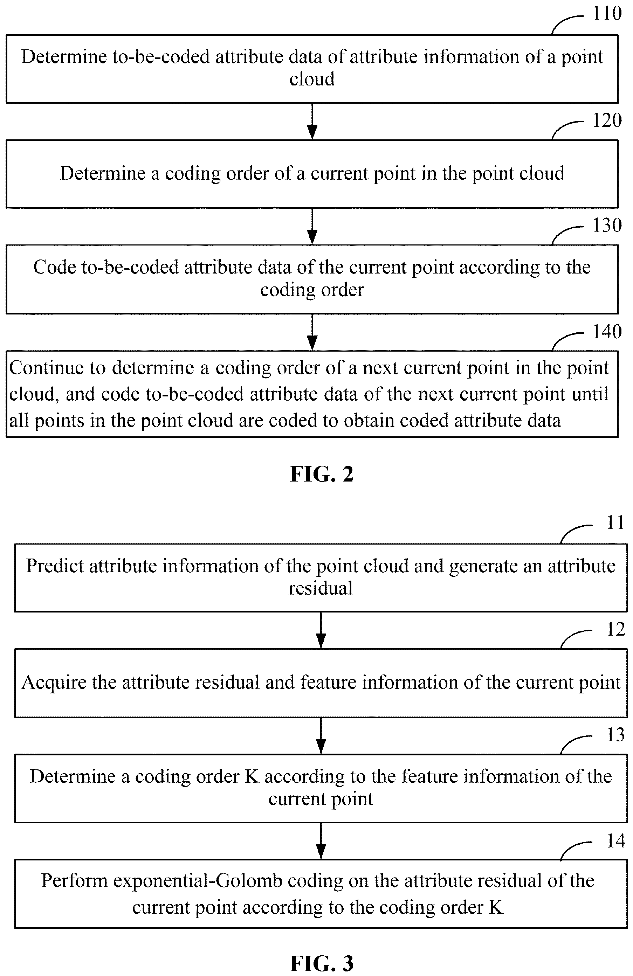

To solve the preceding technical problems, FIG. 2 is a flowchart of a coding method according to an embodiment. As shown in FIG. 2, the method provided in this embodiment includes steps 110, 120, 130, and 140.

In 110, to-be-coded attribute data of attribute information of a point cloud is determined.

In this embodiment, the attribute information of the point cloud may refer to information representing the attribute feature of the point cloud, such as the color information and reflectance information of the point cloud. The point cloud may include multiple points. Each type of attribute information may correspond to one attribute value at each point in the point cloud. That is to say, an attribute value of one type of attribute information may exist correspondingly at each point in the point cloud. For example, in the color information, the attribute value may be a value in the RGB color space (such as the value corresponding to R, G, or B) or may be a value in the YUV color space (such as the value corresponding to Y, U, or V).

The to-be-coded attribute data may refer to attribute data of the to-be-coded attribute information. For example, the to-be-coded attribute data may be the attribute value corresponding to the attribute information of the point cloud or may be the attribute residual corresponding to the attribute information of the point cloud. At each point in the point cloud, the attribute value of each type of attribute information may correspond to an attribute residual. The attribute residual may be understood as a difference between the attribute value of each point in the point cloud and the corresponding predicted value. The attribute value of one type of attribute information of each point may correspond to a predicted value. The predicted value may be understood as a determined value predicted according to the attribute values of all current attribute information (that is, the current attribute information corresponding to all points in the current point cloud, and the current attribute information may be considered as the currently processed attribute information, such as the attribute information currently to be coded) in the point cloud at the point. For example, the predicted value may be the attribute value closest to the current attribute value among the attribute values of all the current attribute information in the point cloud at the point; or the predicted value may be the attribute value closest to the current attribute value among the attribute values of part of the current attribute information in the point cloud at the point, where part of the current attribute information may be the attribute information that has been coded.

The point cloud may be a point cloud in one frame of image or a point cloud in a partial region of one frame of image. The partial region is not limited and may be determined according to actual conditions.

In this operation, the coding may be performed based on the attribute information of each point; the coding may be performed based on part of the attribute information of each point; or the coding may be performed based on a certain piece of attribute information of each point, which is not limited in this embodiment. The coding manners based on each type of attribute information may be independent of each other.

In 120, a coding order of a current point in the point cloud is determined.

In this embodiment, the coding order may be understood as the order for coding the current point in the point cloud. One or more coding orders may be provided. How to determine the coding order of the current point in the point cloud is not limited here. For example, the coding order may be determined according to the feature information of the current point in the point cloud; or the coding order may be determined according to the corresponding configuration file.

The feature information of the current point may be understood as information representing the feature of the current point, which is not limited here. For example, the feature information of the current point may refer to the sequence feature of the current point in the traversed point cloud sequence. For example, when the first point in the point cloud sequence is traversed, the sequence feature of the current point is 1; and when an $N^{th}$ point in the point cloud sequence is traversed, the sequence feature of the current point is N. During coding, the sequence feature may correspond to the coding sequence of the current point in the entire point cloud sequence. Alternatively, the feature information of the current point may refer to the local texture feature at the current point. For example, the local texture feature at the current point is a texture smooth region or a texture mutation region. Alternatively, the feature information of the current point may refer to the attribute feature of the current point. For example, the attribute feature of the current point may be the reflectance attribute or the color attribute. Alternatively, the feature information of the current point may be the geometric position feature of the current point in the point cloud. For example, the geometric position feature may be that the current point is located at the center of the point cloud or the edge of the point cloud.

In 130, the to-be-coded attribute data of the current point is coded according to the coding order.

In this embodiment, after the coding order of the current point in the point cloud is determined, the to-be- coded attribute data of the current point may be coded according to the determined coding order, where the coding may be exponential-Golomb coding.

How to code the to-be-coded attribute data of the current point according to the coding order is not limited here. Different numbers of coding orders may correspond to different coding methods. For example, if one coding order is provided, the to-be-coded attribute data of the attribute information of the current point may be coded using the coding order.

If two or more coding orders are provided, attribute components of the attribute information of the current point may be coded separately, where the attribute components may be understood as sub-attribute feature components representing the attribute information. Assuming that the attribute information of the current point is the color information (such as YUV), if two coding orders are provided, one attribute component (such as Y) of the attribute information of the current point may be coded using one of the two coding orders, and the other two attribute components (such as U and V) of the attribute information of the current point are coded using the other one of the two coding orders. If more than two (such as three) coding orders are provided, each attribute component of the attribute information of the current point may be coded using one of the three coding orders. It is to be understood that the coding order used by each attribute component may be different. It is to be noted that this embodiment does not limit the coding process using the coding order.

In 140, it is continued to determine a coding order of a next current point in the point cloud, and to-be-coded attribute data of the next current point is coded until all points in the point cloud are coded to obtain coded attribute data.

In this embodiment, the point cloud includes multiple points. To code the point cloud, the operations of 110 to 130 may be performed for each point in the point cloud to code each point in the point cloud. The points in the point cloud are traversed, after the to-be-coded attribute data of the current point is coded, it is continued to determine the coding order of the next current point in the point cloud, and the to-be-coded attribute data of the next current point is coded until all points in the point cloud are coded and the coded attribute data is obtained. The next current point may be understood as the next uncoded point in the point cloud. The coded attribute data may be understood as data obtained by coding the to-be-coded data of the attribute information of the point cloud.

In this embodiment, for the coded attribute data, a corresponding file may be generated for storage, or a code stream may be generated for transmission, which is not limited here. In this embodiment, the to-be-coded attribute data of the determined attribute information of each point is coded through the determined coding order of each point in the point cloud so that each point in the point cloud corresponds to a suitable coding order for coding and the problems such as low coding performance caused by using the fixed order for coding can be avoided, thereby effectively improving the coding flexibility and performance.

In an embodiment, one coding order is provided.

In an embodiment, the operation that the to-be-coded attribute data of the current point is coded according to the coding order includes the following:

The to-be-coded attribute data of the attribute information of the current point is coded using a corresponding coding order.

In this embodiment, when one coding order is provided, the to-be-coded attribute data of the attribute information of the current point may be coded using the coding order. For example, the to-be-coded attribute data of the color information of the current point is coded using the coding order.

In an embodiment, at least two coding orders are provided.

In an embodiment, the operation that the to-be-coded attribute data of the current point is coded according to the coding order includes the following:

To-be-coded attribute data of each attribute component of the attribute information of the current point is coded using a corresponding coding order.

In this embodiment, when at least two coding orders are provided, the to-be-coded attribute data of each attribute component of the attribute information of the current point may be coded using the corresponding coding order.

For example, when two coding orders are provided, part of the attribute components of the attribute information of the current point may be coded using one coding order, and the remaining part of the attribute components are coded using the other coding order. For example, if the attribute information of the current point includes three attribute components, any one of the three attribute components may be coded using one coding order, and the remaining two attribute components may be coded using the other coding order.

Similarly, if two or more coding orders are provided, one or more attribute components of the attribute information of the current point may be coded using different coding orders respectively. For example, when there are three coding orders and three attribute components of the attribute information of the current point, a different respective coding order may be used for each attribute component.

In an embodiment, the operation that the coding order of the current point in the point cloud is determined includes the following:

The coding order is determined according to feature information of the current point in the point cloud.

In this embodiment, the method for determining the coding order of the current point in the point cloud may be related to the feature information of the current point, that is, the coding order may be determined according to the feature information of the current point in the point cloud.

The feature information of the current point may include one or more of the following: the sequence feature of the current point in the traversed point cloud sequence; the local texture feature at the current point; the attribute feature of the current point; or the geometric position feature of the current point in the point cloud.

How to determine the coding order according to the feature information of the current point in the point cloud is not limited here. Different feature information may determine the coding order in different manners. For example, when the feature information is the sequence feature of the current point in the traversed point cloud sequence, the coding order may be determined according to the average value of attribute residuals corresponding to the current point and/or a specified number of points before the current point. When the feature information is the local texture feature at the current point, the corresponding coding order may be determined according to whether the current point is in the texture smooth region or the texture mutation region. When the feature information is the attribute feature of the current point, the corresponding coding order may be determined according to whether the attribute feature of the current point is the reflectance attribute, the color attribute, or other attributes. When the feature information is the geometric position feature of the current point in the point cloud, the corresponding coding order may be determined according to that the current point is located at the center of the point cloud or the edge of the point cloud.

In an embodiment, the operation that the coding order of the current point in the point cloud is determined includes the following:

The coding order of the current point is determined according to the attribute information of the current point and/or the attribute information of a point associated with the current point in the point cloud.

In this embodiment, the point associated with the current point in the point cloud may be understood as a specified number of points before the current point in the point cloud, and the specified number may be one or more. The sequence of these points may be considered as the arrangement sequence of the points or the coding sequence of the points in the point cloud, which is not limited here. The sequence may be determined based on the positions of points in the actual image.

How to determine the coding order of the current point according to the attribute information of the current point and/or the attribute information of the point associated with the current point in the point cloud is not limited here. For example, at least one of the attribute value and the attribute residual corresponding to each attribute information may be determined according to the attribute information of the current point and/or the attribute information of the point associated with the current point in the point cloud, and the coding order of the current point may be calculated according to the determined attribute value and/or attribute residual. How to calculate the coding order of the current point according to the determined attribute value and/or attribute residual is not limited here. The determined attribute value and/or attribute residual may be stored in the form of an attribute array or in other forms, which is not limited here.

In an embodiment, the operation that the coding order of the current point is determined according to the attribute information of the current point and/or the attribute information of the point associated with the current point in the point cloud includes the following:

An attribute array corresponding to the current point is determined according to the attribute information of the current point and/or the attribute information of the point associated with the current point in the point cloud.

The coding order of the current point is determined according to the attribute array.

In this embodiment, the attribute information of the current point and/or the attribute information of the point associated with the current point in the point cloud may correspond to at least one attribute array, and the attribute array may be understood as an array in which the attribute value of the attribute information of the point and/or the attribute residual of the attribute information of the point is used as an element. The attribute array may include one or more elements. The length of the attribute array may be understood as the number of elements that can be included in the attribute array. For example, if the length of the attribute array is n, the attribute array may include n elements (n is greater than equal to 1), that is, the attribute array may include up to n elements. The length of the attribute array is not limited here. For example, the length of the attribute array may be a preset length value, a length value calculated according to a preset rule, a length value configured through a relevant configuration file, or a length value determined by transmission through the code stream.

How to determine the attribute array corresponding to the attribute information of the current point according to the attribute information of the current point and/or the attribute information of the point associated with the current point in the point cloud is not limited here. For example, the attribute residual and/or attribute value of the attribute information of the current point and the attribute residual and/or attribute value of the attribute information of the point associated with the current point in the point cloud may be obtained according to the attribute information of the current point and/or the attribute information of the point associated with the current point in the point cloud. On this basis, one attribute array corresponding to the current point may be determined according to the obtained attribute residual and/or attribute value of the attribute information of the current point and the obtained attribute residual and/or attribute value of the attribute information of the point associated with the current point in the point cloud. For example, the attribute array may include the attribute residual of the attribute information of the current point, the attribute value of the attribute information of the current point, the attribute residual of the attribute information of the point associated with the current point in the point cloud, and/or the attribute value of the attribute information of the point associated with the current point in the point cloud.

At least one attribute component of the attribute information of the current point may correspond to one attribute array. For example, one attribute component may correspond to one attribute array, or multiple attribute components may correspond to one attribute array. The attribute array may be understood as an array in which the attribute value of the attribute component of the attribute information of the point and/or the attribute residual of the attribute component of the attribute information of the point is used as an element. Different attribute components may correspond to the same attribute array or different attribute arrays. For the length of the attribute array corresponding to the attribute component, reference may be made to the preceding description of the length of the attribute array of the attribute information of the current point, and the details are not repeated here.

How to determine the attribute array corresponding to at least one attribute component of the attribute information of the current point according to the attribute information of the current point and/or the attribute information of the point associated with the current point in the point cloud is not limited here. For example, the attribute residual and/or attribute value corresponding to each attribute component of the attribute information of the current point and the attribute residual and/or attribute value of each attribute component of the attribute information of the point associated with the current point in the point cloud may be obtained according to the attribute information of the current point and/or the attribute information of the point associated with the current point in the point cloud. On this basis, one attribute array corresponding to at least one attribute component of the attribute information of the current point may be determined according to the obtained attribute residual and/or attribute value of each attribute component of the attribute information of the current point and the obtained attribute residual and/or attribute value of each attribute component of the attribute information of the point associated with the current point in the point cloud. For example, the attribute array may include the attribute residuals of the attribute components of the attribute information of the current point, the attribute values of the attribute components of the attribute information of the current point, the attribute residuals of the attribute components of the attribute information of the point associated with the current point in the point cloud, and/or the attribute values of the attribute components of the attribute information of the point associated with the current point in the point cloud.

On this basis, the method for calculating the coding order may be determined according to the number of elements in the attribute array. Different numbers of elements in the attribute array may correspond to different methods for calculating the coding order, which is not limited here.

In an embodiment, the operation that the coding order of the current point is determined according to the attribute array includes the following:

In a case where the number of elements in the attribute array is less than a set threshold, an initial order is determined as the coding order.

In a case where the number of elements in the attribute array is greater than or equal to the set threshold, the coding order is determined according to values of the elements in the attribute array.

In this embodiment, the set threshold may refer to a preset threshold. The value of the set threshold is not limited here and may be flexibly set according to actual requirements.

The length n of the attribute array and the set threshold N may be the same or different. For example, similar to the length n of the attribute array, the set threshold N may be a preset value, may be calculated according to a preset rule, or may be configured through a corresponding configuration file, that is, a default value is configured for each of the data transmitting end and the data receiving end of the coded data of the point cloud, and the default value is not included in the coded data of the point cloud.

In the case where the number of elements in the attribute array is less than the set threshold, the initial order may be determined as the coding order. The initial order may refer to the coding order set in the initial stage. For example, the initial order may be a preset value, may be calculated according to a preset rule, or may be configured through the corresponding configuration file, that is, the default value is configured for each of the data transmitting end and the data receiving end of coded data of the point cloud; and the default value is not included in the coded data of the point cloud; or the default value may be coded into the coded data of the point cloud, then the transmitting end sends the coded data to the receiving end, and the receiving end decodes the coded data to obtain the initial order.

In the case where the number of elements in the attribute array is greater than or equal to the set threshold, the coding order may be determined according to the values of the elements in the attribute array. For example, the coding order may be calculated based on the average value of the values of the elements in the attribute array.

In an embodiment, the operation that the coding order is determined according to the values of the elements in the attribute array includes the following:

The coding order is determined based on an average value of the values of the elements in the attribute array.

In this embodiment, how to determine the coding order based on the average value of the values of the elements in the attribute array is not limited. The coding order may be obtained by performing a mathematical operation on the determined average value. For example, the coding order may be calculated based on the formula below.

$$\text{k} = floor(\log_2(\text{attr}_{\text{avg}})) + 1$$

floor(x) may denote the round-down function, that is, the maximum integer not greater than x is taken; and $\text{attr}_{\text{avg}}$ may denote the average value of the values of the elements in the attribute array.

After the value of k is determined, the value of k may be directly used as the final coding order, or the corresponding order may be found in a preset table according to the value of k and used as the coding order.

In an embodiment, the attribute information of the current point corresponds to one attribute array.

In an embodiment, the attribute array includes one or more of the following:

an attribute value of the attribute information; or

an attribute residual of the attribute information.

In an embodiment, at least one attribute component of the attribute information of the current point corresponds to one attribute array.

In an embodiment, the attribute array includes one or more of the following:

an attribute value of an attribute component; or

an attribute residual of the attribute component.

The coding method is exemplarily described below through different embodiments.

Embodiment one

FIG. 3 is a schematic diagram illustrating the implementation of a point cloud entropy coding method according to an embodiment. As shown in FIG. 3, the implementation process of the point cloud entropy coding method provided in this embodiment may include the following.

In operation 11, the attribute information of the point cloud is predicted and the attribute residual (that is, to-be-coded attribute data) is generated.

All attribute values of a certain piece of attribute information of the point cloud are traversed, the predicted value is found for the attribute value of each point, and the corresponding predicted value is subtracted from the attribute value of each point to generate the attribute residual.

The attribute information refers to information such as the color and reflectance of the point cloud. Each type of attribute information has an attribute value at each point in the point cloud. For example, the color information may be a value (R, G, or B) in the RGB color space or a value (Y, U, or V) in the YUV color space, where Y denotes the luminance of the point, and U and V denote the chroma of the point.

The predicted value may be the value closest to the current attribute value in all the current attribute information of the point cloud or the value closest to the current attribute value in part of the current attribute information of the point cloud, such as the coded attribute information.

It is to be noted that this operation may further include selecting a quantization parameter to quantize the attribute residual. Quantization refers to the process of approximating the continuous values or a large number of possible discrete values of the signal as a limited number of discrete values or fewer discrete values. The quantization parameter reflects the compression amplitude of the original signal by the quantization process. Therefore, the attribute residual mentioned in the subsequent description of this embodiment may be the attribute residual without quantization or a quantized attribute residual.

In operation 12, the attribute residual and feature information of the current point are acquired.

The feature information may be the sequence feature of the current point in the traversed point cloud sequence. For example, when the first point in the point cloud sequence is traversed, the sequence feature of the current point is 1; and when an $N^{th}$ point in the point cloud sequence is traversed, the sequence feature of the current point is N.

In addition, the feature information may be the local texture feature at the current point. For example, the local texture feature at the current point is the texture smooth region or the texture mutation region. Alternatively, the feature information may be the attribute feature of the current point. For example, the attribute feature of the current point is the reflectance attribute or the color attribute. Alternatively, the feature information may be the geometric position feature of the current point in the point cloud. For example, the current point is located at the center of the point cloud or the edge of the point cloud. During coding, the sequence feature may correspond to the coding sequence of the current point in the entire point cloud sequence.

In operation 13, the coding order K is determined according to the feature information of the current point.

The coding order K may be determined according to the feature information obtained in operation 12. The method for determining the coding order K may be related to the type of feature information. In this embodiment, how to determine the coding order K according to the feature information of the current point is not limited. For example, when the feature information is the sequence feature of the current point, the method for determining the coding order K includes determining the coding coder K according to the average value of the attribute residuals corresponding to the current point and/or a specified number of points before the current point in the point cloud. When the feature information is the local texture feature at the current point, the method for determining the coding order K may include determining the corresponding coding order K according to whether the current point is in the texture smooth region or the texture mutation region. When the feature information is the attribute feature of the current point, the corresponding coding order K is determined according to whether the attribute of the current point is the reflectance attribute, the color attribute, or other attributes. When the feature information is the geometric position feature of the current point in the point cloud, the corresponding coding order K is determined according to whether the current point is located at the center of the point cloud or the edge of the point cloud.

The coding order K may be a value or an array, and the array may include at least two numerical elements (that is, one or at least two coding orders may be provided).

In operation 14, exponential-Golomb coding is performed on the attribute residual of the current point according to the coding order K.

In this embodiment, how to perform the exponential-Golomb coding on the attribute residual of the current point according to the coding order K is not limited.

When the coding order K is a value, $K^{th}$-order exponential-Golomb coding is used for the attribute residual of the current point (that is, when one coding order is provided, the to-be-coded attribute data of the attribute information of the current point is coded using the corresponding coding order). At this time, the attribute information may be the color attribute, the reflectance attribute, or other attributes of the point cloud.

When the coding order K is a binary array expressed as K = (k1, k2), $k1^{th}$-order exponential-Golomb coding is used for the attribute residual on the luminance component Y in the color attribute of the current point, and $k2^{th}$-order exponential-Golomb coding is used for the attribute residuals on the chroma components U and V of the current point (that is, when at least two coding orders are provided, the to-be-coded attribute data of each attribute component of the attribute information of the current point may be coded using the corresponding coding order).

When the coding order K is a three-element array expressed as K = (k1, k2, k3), $k1^{th}$-order exponential-Golomb coding is used for the attribute residual on the luminance component Y in the color attribute of the current point, $k2^{th}$-order exponential-Golomb coding is used for the attribute residual on the chroma component U of the current point, and $k3^{th}$-order exponential-Golomb coding is used for the attribute residual on the chroma component V of the current point (that is, when at least two coding orders are provided, the to-be-coded attribute data of each attribute component of the attribute information of the current point may be coded using the corresponding coding order).

It is to be noted that the color attribute is described using the YUV color space in this embodiment as an example; and alternatively, the RGB color space may also be used. Correspondingly, for example, exponential-Golomb coding with different orders is used for one or two of the R component, the G component, or the B component in the RGB color space.

How to implement the entropy coding process of $K^{th}$-order exponential-Golomb coding is not limited in this embodiment.

It is to be noted that operations 12 to 14 need to be performed in a loop until every point in the point cloud is traversed as the current point (that is, it is continued to determine the coding order of the next current point in the point cloud, and the to-be-coded attribute data of the next current point is coded until all points in the point cloud are coded to obtain the coded attribute data).

In this embodiment, for the coded data, a file may be generated for storage, or a code stream may be generated for transmission, which is not limited here.

Embodiment two

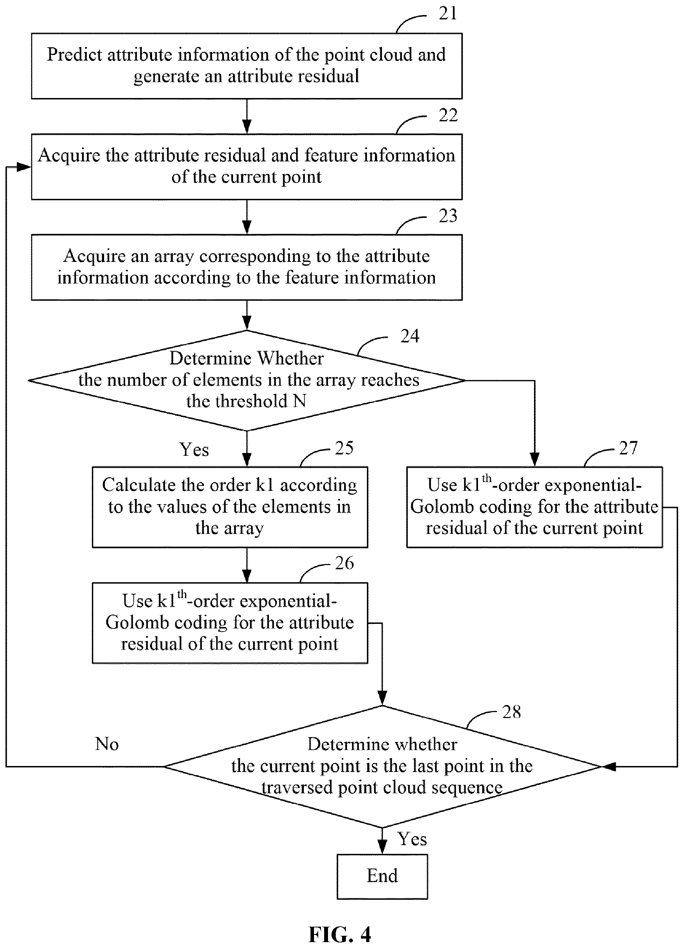

FIG. 4 is a schematic diagram illustrating the implementation of another point cloud entropy coding method according to an embodiment. As shown in FIG. 4, the implementation process of the entropy coding method of the attribute information of the point cloud provided in this embodiment may include the following.

In operation 21, the attribute information of the point cloud is predicted and the attribute residual is generated.

Reference may be made to operation 11 in embodiment one above.

In operation 22, the attribute residual and the feature information of the current point are acquired.

As described in operation 22 in embodiment one, the feature information of the current point may be the sequence feature of the current point in the traversed point cloud sequence, the local texture feature at the current point, the attribute feature of the current point, or the geometric position feature of the current point in the point cloud. In this embodiment, the sequence feature is used as an example for exemplary description.

In operation 23, the array corresponding to the attribute information is acquired according to the feature information (that is, the attribute information of the current point corresponds to one attribute array).

The elements in the array corresponding to the attribute information of the current point are the attribute values of points before the current point in the traversed point cloud. The maximum length of the array (that is, the length of the attribute array) may be set to n, that is, up to n elements may be included in the array. The maximum length n of the array may be a preset value, may be calculated according to a preset rule, may be configured through a configuration file, or may be transmitted through the code stream.

A method for acquiring the array corresponding to the feature information of the current point may include the following: 1, when the current point is the first point, an empty array is created and the attribute residual of the current point is added to the empty array; and 2, when the current point is not the first point, an array corresponding to a point before the current point is acquired and the attribute residual of the current point is added to the array.

Another method for acquiring the array corresponding to the feature information of the current point may include the following: 1, when the current point is the first point, an empty array is created; and 2, when the current point is not the first point, an array corresponding to a point before the current point is acquired, where the array includes the attribute residual corresponding to the point before the current point.

When the number of elements in the array exceeds the maximum length n of the array, at least one element needs to be deleted to ensure that the number of elements in the array satisfies the maximum length requirement of the array. The method for determining the to-be-deleted element is not limited. For example, the firstly-added element may be deleted according to the sequence in which the elements are added to the array; or elements may be sorted according to the distances from the current point, and an element corresponding to one or more points farthest from the current point is deleted; or elements may be sorted according to the values of the elements, and the elements with the maximum value and/or the minimum value are deleted.

In operation 24, whether the number of elements in the array (that is, the attribute array) reaches the threshold N (that is, the set threshold) is determined. If so, operation 25 is executed; otherwise, operation 27 is executed.

In this embodiment, the maximum length n of the array and the threshold N mentioned in operation 23 may be the same or different.

For example, the maximum length n of the array and/or the threshold N may be preset values, may be calculated according to the preset rule, or may be configured through the configuration file, that is, the default value is configured for each of the data transmitting end and the data receiving end of coded data of the point cloud, and the default value is not in the coded data of the point cloud.

The maximum length n of the array and/or the threshold N may be coded into the coded data of the point cloud, the transmitting end sends the coded data to the receiving end, and the receiving end decodes the coded data to obtain the threshold N.

For example, the maximum length n of the array and/or the threshold information may be placed in the sequence header, the attribute header, the attribute slice header, or the corresponding attribute information.

Alternatively, the maximum length n of the array and/or the threshold may be transmitted in an out-of-band manner, for example, transmitted in the auxiliary information (a supplementary and enhanced information (SEI) message) of the video code stream or in a system layer.

When only the maximum length n of the array or the threshold N can be acquired, the maximum length n of the array and the threshold N may be the same by default.

In operation 25, the order k1 is calculated according to the values of the elements in the array (that is, in the case where the number of elements in the attribute array is greater than or equal to the set threshold, the coding order is determined according to the values of the elements in the attribute array).

In this embodiment, the method for calculating the order is not limited. For example, the method for calculating the order may include calculating the average value attravg of all the elements in the array. The formula for calculating the exponential-Golomb coding order k may be expressed below.

$$\mathrm{k} = floor(\log_2(\mathrm{attr_{avg}})) + 1$$

That is, the coding order is determined based on the average value of the values of the elements in the attribute array. k may be directly used as the exponential-Golomb coding order k1 of the current point attribute coding. Alternatively, the corresponding order k1 may be found in a preset table according to the value of k.

In operation 26, k1[th]-order exponential-Golomb coding is used for the attribute residual of the current point.

In this embodiment, how to implement the entropy coding process of k1[th]-order exponential-Golomb coding is not limited.

In operation 27, the exponential-Golomb coding with an initial order of k0 (that is, the initial order) is used for the attribute residual of the current point.

Similar to the threshold N, the initial order k0 may be a preset value, may be calculated according to a preset rule, or may be configured through a configuration file, that is, the default value is configured for each of the data transmitting end and the data receiving end of coded data of the point cloud, and the default value is not saved in the code data of the point cloud.

Alternatively, the initial order k0 may be coded into the coded data of the point cloud, the transmitting end sends the coded data to the receiving end, and the receiving end decodes the coded data to obtain the initial order k0. For example, the initial order k0 may be placed in the sequence header, the attribute header, the attribute slice header, or the corresponding attribute information. Alternatively, the initial order k0 may be transmitted in an out-of-band manner, for example, transmitted in the auxiliary information (that is, an SEI message) of the video code stream or in the system layer.

In operation 28, whether the current point is the last point in the traversed point cloud sequence is determined. If so, the process ends; otherwise, operation 22 is executed

Determining whether the current point is the last point in the traversed point cloud sequence may be understood as determining whether all points in the point cloud sequence have been traversed. If so, the process ends; otherwise, operation 22 is executed.

Embodiment three

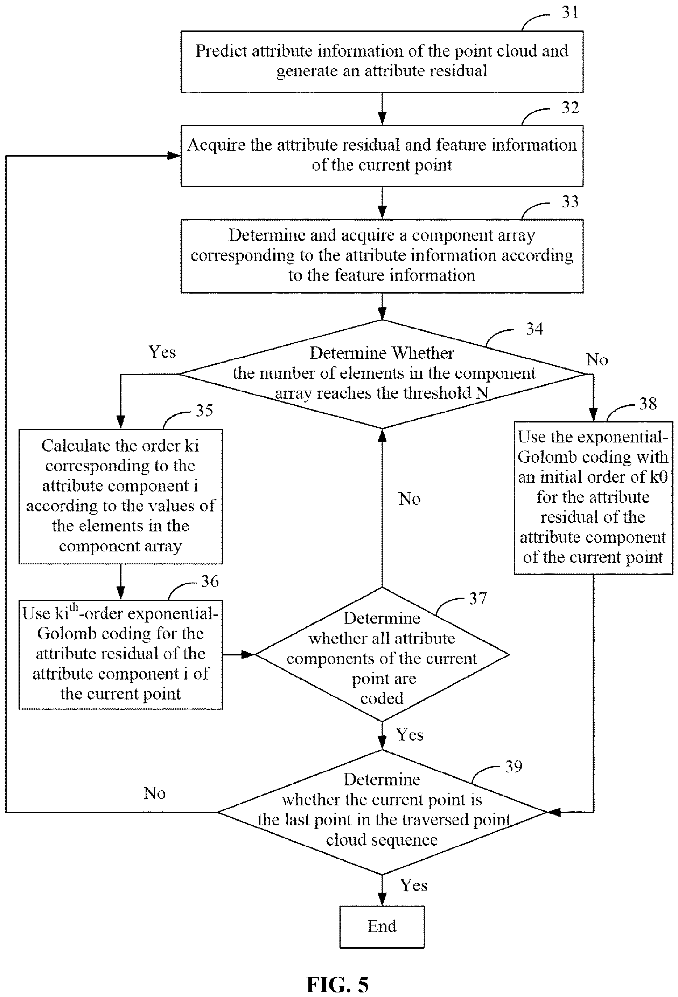

FIG. 5 is a schematic diagram illustrating the implementation of another point cloud entropy coding method according to an embodiment. As shown in FIG. 5, the implementation process of the entropy coding method of the color attribute information of the point cloud provided in this embodiment may include the following.

In operation 31, the attribute information of the point cloud is predicted and the attribute residual is generated.

Reference may be made to operation 11 in embodiment one above.

In operation 32, the attribute residual and the feature information of the current point are acquired.

Reference may be made to operation 12 in embodiment one above.

In operation 33, a component array corresponding to the attribute information is determined and acquired according to the feature information (that is, at least one attribute component of the attribute information of the current point corresponds to one attribute array).

The component array (that is, the attribute array) means that at least one attribute component i of the attribute information corresponds to one attribute array. The elements in the component array are the values of the attribute component i of points before the current point in the traversed point cloud (the value of i is the attribute value corresponding to the attribute component i). The color attribute of the YUV space is used as an example for exemplary description. The component array may be an array corresponding to the luminance component Y and an array corresponding to the chroma components U and V; or the component array may be an array corresponding to the luminance component U, an array corresponding to the chroma component U, and an array corresponding to the chroma component V

The maximum length of the array (that is, the length of the attribute array) may be set to n, that is, up to n elements may be included in the array. The maximum lengths of arrays corresponding to different components may be the same or different. The maximum length n of the array may be a preset value, may be calculated according to a preset rule, may be configured through a configuration file, or may be transmitted through the code stream.

In actual application, a two-dimensional array may be used to represent the attribute components and the corresponding arrays, or a one-dimensional array may be maintained for each attribute component.

The method for determining and acquiring the component array according to the feature information includes, but is not limited to, one of the following: determining the component array according to the local texture feature of the point cloud; determining the component array according to a configuration file; determining the component array according to the type of the point cloud; or determining the component array according to the change in the value of the attribute component of the point cloud.

In operation 34, whether the number of elements in the component array reaches the threshold N (that is, the set threshold) is determined. If so, operation 35 is executed; otherwise, operation 38 is executed.

Whether the number of elements in the array corresponding to each attribute component reaches the threshold N is determined. For example, whether the number of elements in the array corresponding to the luminance component Y reaches the threshold N is determined, whether the number of elements in the array corresponding to the chroma component U reaches the threshold N is determined, and whether the number of elements in the array corresponding to the chroma component V reaches the threshold N is determined. To determine whether the number of elements in the array corresponding to a certain attribute component reaches the threshold N, reference may be made to operation 24 in embodiment two above.

In addition, the thresholds N of the arrays corresponding to different components may be the same or different.

In operation 35, the order ki corresponding to the attribute component i is calculated according to the values of the elements in the component array (that is, in the case where the number of elements in the attribute array is greater than or equal to the set threshold, the coding order is determined according to the values of the elements in the attribute array).

For the method for calculating the order ki corresponding to the attribute component i according to the values of the elements in the array corresponding to the attribute component i, reference may be made to operation 25 in embodiment two above.

In this embodiment, the method for calculating the order is not limited. For example, the method for calculating the order may include calculating the average value attravg of the values of all elements in the component array. The formula for calculating the exponential-Golomb coding order k may be expressed below.

$$k = floor(\log_2(\text{attr}_{avg})) + 1$$

k may be directly used as the order ki corresponding to the attribute component i. Alternatively, the corresponding order ki may be found in a preset table according to the value of k.

The methods for calculating the order ki for different attribute components i may be the same or different.

In operation 36, ki[th]-order exponential-Golomb coding is used for the attribute residual of the attribute component i of the current point.

In this embodiment, for the method for using ki[th]-order exponential-Golomb coding for the residual of the attribute component i of the current point, reference may be made to operation 26 in embodiment two.

In operation 37, whether all attribute components of the current point are coded is determined. If so, operation 39 is performed; otherwise, operation 34 is performed.

The color attribute of the YUV space is used as an example. Determining whether all the attribute components of the current point are coded may be understood as determining whether the residuals of the luminance Y, the chroma U, and the chroma V are coded.

In operation 38, the exponential-Golomb coding with an initial order of k0 (that is, the initial order) is used for the attribute residual of the attribute component of the current point.

Reference may be made here to operation 27 in embodiment two above.

Different attribute components may correspond to the same initial order or different initial orders.

In operation 39, whether the current point is the last point in the traversed point cloud sequence is determined. If so, the process ends; otherwise, operation 32 is performed.

Determining whether the current point is the last point in the traversed point cloud sequence may be understood as determining whether all points in the point cloud sequence have been traversed. If so, the process ends; otherwise, operation 32 is performed.

It is to be noted that one frame of point cloud may be divided into partitions, and then the attribute residual of each partition may be coded respectively. Any method in embodiments one to three above may be used for the point cloud attribute residual coding of each partition. The point cloud attribute residual coding method for different partitions may be the same or different.

Any method in embodiments one to three above may be used for the attribute residual coding of different attribute information in the point cloud of the same frame or the same partition. The attribute residual coding methods corresponding to different attribute information of the same point may be the same or different.

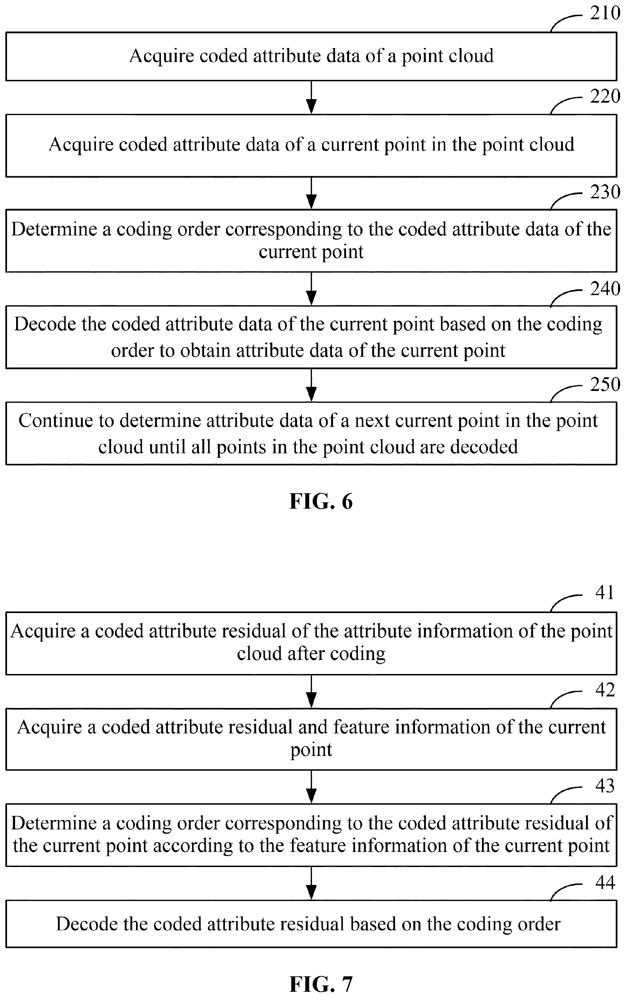

FIG. 6 is a flowchart of a decoding method according to an embodiment. As shown in FIG. 6, the method provided in this embodiment includes operations 210, 220, 230, 240, and 250.

In operation 210, coded attribute data of a point cloud is acquired.

In this embodiment, the coded attribute data may be understood as data obtained by coding the to-be-coded attribute data. For example, the coded attribute data is the data obtained by coding the attribute residual and/or attribute value of the attribute information of the point cloud, where coding may refer to any coding method provided in the preceding embodiments. How to acquire the coded attribute data of the point cloud is not limited here.

In operation 220, the coded attribute data of a current point in the point cloud is acquired.

In this embodiment, the coded attribute data of the current point may be understood as the data obtained by coding the attribute residual and/or attribute value of the attribute information of the current point in the point cloud. Similarly, coding may refer to any coding method provided in the preceding embodiments. How to acquire the coded attribute data of the current point in the point cloud is not limited here.

In operation 230, a coding order corresponding to the coded attribute data of the current point is determined.

In this embodiment, how to determine the coding order corresponding to the coded attribute data of the current point is not limited. For example, the coding order corresponding to the coded attribute data of the current point may be determined according to the feature information of the current point in the point cloud; or the coding order corresponding to the coded attribute data of the current point may be determined according to the corresponding configuration file.

Similarly, the feature information of the current point may include the sequence feature of the current point in the traversed point cloud sequence, the local texture feature at the current point, the attribute feature of the current point, or the geometric position feature of the current point in the point cloud.

How to determine the coding order corresponding to the coded attribute data of the current point according to the feature information of the current point in the point cloud is not limited here. Different feature information may determine the coding order in different methods. For example, when the feature information is the sequence feature of the current point in the traversed point cloud sequence, the coding order corresponding to the coded attribute data of the current point may be determined according to the average value of the attribute residuals corresponding to the current point and/or a specified number of points before the current point. When the feature information is the local texture feature at the current point, the coding order corresponding to the coded attribute data of the current point may be determined according to whether the current point is in the texture smooth region or the texture mutation region. When the feature information is the attribute feature of the current point, the coding order corresponding to the coded attribute data of the current point may be determined according to whether the attribute feature of the current point is the reflectance attribute, the color attribute, or other attributes. When the feature information is the geometric position feature of the current point in the point cloud, the coding order corresponding to the coded attribute data of the current point may be determined according to that the current point is located at the center of the point cloud or the edge of the point cloud.

One or more (that is, at least two) coding orders corresponding to the coded attribute data of the current point may be provided. When the attribute information includes multiple attribute components, if one coding order is provided, it may represent that the attribute residuals of multiple attribute components may correspond to the same coding order; and if multiple coding orders are provided, it may represent that the attribute residuals of multiple attribute components may have respective coding orders, for example, each attribute component may correspond to a different coding order.

In operation 240, the coded attribute data of the current point is decoded based on the coding order to obtain the attribute data of the current point.

In this embodiment, after the coding order corresponding to the coded attribute data of the current point in the point cloud is determined, the coded attribute data of the current point may be decoded according to the determined coding order to obtain the attribute data of the current point. The attribute data of the current point may be understood as data obtained by decoding the coded attribute data of the current point.

How to decode the coded attribute data of the current point based on the coding order is not limited here. Different numbers of coding orders may correspond to different decoding methods. For example, if one coding order is provided, the coded attribute data of the current point may be decoded using the coding order.

If two or more coding orders are provided, the coded attribute data of each attribute component of the current point may be decoded using the coding order corresponding to the respective attribute component. Assuming that the attribute information of the current point is the color information (such as YUV), if two coding orders are provided, one attribute component (such as Y) of the attribute information of the current point corresponds to one coding order, and the other two attribute components (such as U and V) of the attribute information of the current point correspond to the other coding order, the coded attribute data of the corresponding attribute component may be decoded using the coding order corresponding to each attribute component to obtain the attribute data of the attribute component. If two or more (such as three) coding orders are provided, each attribute component of the attribute information of the current point may be coded using one of the three coding orders, and the coding orders used for different attribute components are different, the coded attribute data of the corresponding attribute component may be decoded using the coding order corresponding to each attribute component to obtain the attribute data of the attribute component. It is to be noted that this embodiment does not limit the decoding process.

In operation 250, it is continued to determine the attribute data of a next current point in the point cloud until all points in the point cloud are decoded.

In this embodiment, after decoding is performed to obtain the attribute data of the current point, it may be continued to determine the attribute data of the next current point in the point cloud until all points in the point cloud are decoded.

In this embodiment, the coded attribute data of the current point may be decoded based on the determined coding order corresponding to the coded attribute data of the current point, and the coded attribute data of each point in the point cloud can be decoded using the corresponding coding order through the apparatus to avoid problems such as poor decoding performance caused by using the fixed order for decoding, thereby effectively improving the decoding flexibility and performance.

In an embodiment, one coding order is provided.

In an embodiment, the operation that the coded attribute data of the current point is decoded based on the coding order to obtain the attribute data of the current point includes the following:

Coded attribute data of the current point is decoded based on the coding order to obtain the attribute data of the current point.

In this embodiment, when one coding order is provided, the coded attribute data of the current point may be decoded using the coding order to obtain the attribute data of the current point.

In an embodiment, at least two coding orders are provided.

In an embodiment, the operation that the coded attribute data of the current point is decoded based on the coding order to obtain the attribute data of the current point includes the following:

For each coding order, the coded attribute data of the current point is decoded based on the respective coding order to obtain the attribute data of an attribute component corresponding to the respective coding order among attribute components of the current point.

In this embodiment, when at least two coding orders are provided, the coded attribute data of the attribute component of the current point may be coded using the coding order corresponding to the attribute component.

It is to be understood that the coding orders corresponding to the attribute components may be different; or that the coding orders corresponding to some attribute components may be the same.

In an embodiment, the operation that the coding order corresponding to the coded attribute data of the current point is determined includes the following:

The coding order of the current point is determined according to the coded attribute data of the current point and/or the coded attribute data of the point associated with the current point in the point cloud.

In this embodiment, how to determine the coding order of the current point according to the coded attribute data of the current point and/or the coded attribute data of the point associated with the current point in the point cloud is not limited here. For example, the attribute value and/or attribute residual corresponding to each attribute information may be determined according to the coded attribute data of the current point and/or the coded attribute data of the point associated with the current point in the point cloud, and the coding order of the current point may be determined according to the determined attribute value and/or attribute residual. The determined attribute value and/or attribute residual may be stored in the form of an attribute array or in other forms, which is not limited here.

In an embodiment, the operation that the coding order of the current point is determined according to the coded attribute data of the current point and the coded attribute data of the point associated with the current point in the point cloud includes the following:

An attribute array corresponding to the current point is determined according to the coded attribute data of the current point and/or the coded attribute data of the point associated with the current point in the point cloud.

The coding order of the current point is determined based on the attribute array.

In this embodiment, the attribute array corresponding to the current point may be one attribute array corresponding to the coded attribute data of the attribute information of the current point, or one attribute array corresponding to the coded attribute data of at least one attribute component of the attribute information of the current point.

How to determine the attribute array corresponding to the current point according to the coded attribute data of the current point and/or the coded attribute data of the point associated with the current point in the point cloud is not limited here. For example, when the coded attribute data of the attribute information of the current point corresponds to one attribute array, the attribute residual and/or attribute value of the attribute information of the current point and the attribute residual and/or attribute value of the attribute information of the point associated with the current point in the point cloud may be determined according to the coded attribute data of the current point and/or the coded attribute data of the point associated with the current point in the point cloud. On this basis, the attribute array corresponding to the coded attribute data of the attribute information of the current point may include the attribute residual of the attribute information of the current point, the attribute value of the attribute information of the current point, the attribute residual of the attribute information of the point associated with the current point in the point cloud, and/or the attribute value of the attribute information of the point associated with the current point in the point cloud.

When the coded attribute data of at least one attribute component of the attribute information of the current point corresponds to one attribute array, the attribute residuals and/or attribute values corresponding to the attribute components of the attribute information of the current point and the attribute residuals and/or attribute values of the attribute components of the attribute information of the point associated with the current point in the point cloud may be determined according to the coded attribute data of the current point and/or the coded attribute data of the point associated with the current point in the point cloud. On this basis, the attribute array corresponding to the coded attribute data of at least one attribute component of the attribute information of the current point may include the attribute residuals of the attribute components of the attribute information of the current point, the attribute values of the attribute information of the current point, the attribute residuals of the attribute components of the attribute information of the point associated with the current point in the point cloud, and/or the attribute values of the attribute components of the attribute information of the point associated with the current point in the point cloud.

In an embodiment, the coded attribute data of attribute information of the current point corresponds to one attribute array.

In an embodiment, the attribute array includes one or more of an attribute value of the attribute information; or an attribute residual of the attribute information.

In an embodiment, the coded attribute data of at least one attribute component of attribute information of the current point corresponds to one attribute array.

In an embodiment, the attribute array includes one or more of an attribute value of an attribute component; or an attribute residual of the attribute component.

In an embodiment, the operation that the coding order corresponding to the coded attribute data of the current point is determined includes the following:

The coding order corresponding to the coded attribute data of the current point is determined according to the feature information of the current point in the point cloud.

In an embodiment, the operation that the coding order of the current point is determined based on the attribute array includes the following:

In a case where the number of elements in the attribute array is less than a set threshold, an initial order is determined as the coding order.

In a case where the number of elements in the attribute array is greater than or equal to the set threshold, the coding order is determined according to values of the elements in the attribute array.

In an embodiment, the operation that the coding order is determined according to the values of the elements in the attribute array includes the following:

The coding order is determined based on an average value of the values of the elements in the attribute array.

The decoding method is exemplarily described below through different embodiments.

Embodiment four

FIG. 7 is a schematic diagram illustrating the implementation of a point cloud entropy decoding method according to an embodiment. As shown in FIG. 7, the implementation process of the point cloud entropy decoding method provided in this embodiment may include the following.

In operation 41, the attribute residual of the attribute information of the point cloud after coding is acquired (that is, the coded attribute data of the point cloud is acquired).

The attribute residual of the attribute information of the point cloud after coding (that is, the coded attribute data of the point cloud) refers to the value obtained after the attribute residual of the point cloud is coded in any one of the methods in embodiments one to three.

The attribute information refers to information such as the color and reflectance of the point cloud. Each type of attribute information has an attribute value at each point in the point cloud. For example, the color information may be a value (R, G, or B) in the RGB color space or a value (Y, U, or V) in the YUV color space.

In operation 42, a coded attribute residual of the current point (that is, coded attribute data of the current point in the point cloud) and feature information of the current point are acquired.

As described in embodiment one, the feature information may be the sequence feature of the current point in the traversed point cloud sequence. For example, when the first point in the point cloud sequence is traversed, the sequence feature of the current point is 1; and when an $N^{th}$ point in the point cloud sequence is traversed, the sequence feature of the current point is N. During decoding, the sequence feature may correspond to the decoding sequence of the current point in the entire point cloud sequence.

In addition, the feature information may be the local texture feature at the current point. For example, the local texture feature at the current point is the texture smooth region or the texture mutation region. Alternatively, the feature information may be the attribute feature of the current point. For example, the attribute feature of the current point is the reflectance attribute or the color attribute. Alternatively, the feature information may be the geometric position feature of the current point in the point cloud. For example, the current point is located at the center of the point cloud or the edge of the point cloud. The acquired feature information may be one or more types of the preceding feature information.

In operation 43, a coding order corresponding to the coded attribute residual of the current point is determined (that is, the coding order corresponding to the coded attribute data of the current point is determined) according to the feature information of the current point.

The coding order K corresponding to the coded attribute residual of the current point (that is, the coded attribute data of the current point) is determined according to the feature information acquired in operation 42. The method for determining the coding order K may be related to the type of feature information. In this embodiment, how to determine the coding order K corresponding to the coded attribute residual of the current point according to the feature information of the current point is not limited. For example, when the feature information is the sequence feature of the current point, the method for determining the coding order K includes determining the coding coder K according to the average value of the attribute residuals corresponding to the current point and/or a specified number of points before the current point in the point cloud. When the feature information is the local texture feature at the current point, the method for determining the coding order K may be determining the corresponding coding order K according to whether the current point is in the texture smooth region or the texture mutation region. When the feature information is the attribute feature of the current point, the corresponding coding order K is determined according to whether the attribute of the current point is the reflectance attribute, the color attribute, or other attributes. When the feature information is the geometric position feature of the current point in the point cloud, the corresponding coding order K is determined according to whether the current point is located at the center of the point cloud or the edge of the point cloud.

The coding order K corresponding to the coded attribute residual may be one value or more than two values (that is, one or at least two coding orders may be provided). When the attribute information includes multiple attribute components, if the coding order K is one value, it represents that the attribute residuals of multiple attribute information components correspond to the same coding order; and if the coding order K includes more than two values, it represents that the attribute residuals of multiple attribute information components have their respective coding orders.

In operation 44, the coded attribute residual is decoded based on the coding order (that is, the coded attribute data of the current point is decoded based on the coding order to obtain the attribute data of the current point).

When the coding order K is one value, the coded attribute residual of the current point is decoded based on the coding order K to obtain the attribute residual of the current point (that is, when one coding order is provided, the coded attribute data of the current point is decoded based on the coding order to obtain the attribute data of the current point). At this time, the attribute information may be the color attribute information, the reflectance attribute information, or other attribute information of the point cloud.

The color attribute information is used as an example for description. When the coding order K includes two values and may actually be expressed as K = (k1, k2), it represents that the coding order corresponding to the coded attribute residual on the luminance component Y in the color attribute of the current point is k1, and the coding order corresponding to the coded attribute residuals on the chroma components U and V of the current point is k2.

When the coding order K includes three values and is expressed as K = (k1, k2, k3), it represents that the coding order corresponding to the coded attribute residual on the luminance component Y in the color attribute of the current point is k1, the coding order corresponding to the coded attribute residual on the chroma component U of the current point is k2, and the coding order corresponding to the coded attribute residual on the chroma component V of the current point is k3. (That is, when at least two coding orders are provided, for each coding order, the coded attribute data of the current point is decoded based on the respective coding order to obtain the attribute data of the attribute component corresponding to the respective coding order among attribute components of the current point).

In this embodiment, the color attribute is described using the YUV color space as an example. Alternatively, the RGB color space may be used. For example, exponential-Golomb coding with different coding orders is used for one or two attribute components among the R component, the G component, or the B component in the RGB color space.

Decoding the attribute residual after K-order exponential-Golomb coding to obtain the attribute residual before coding is the related art. The decoding and reasoning process is not described in detail in this solution.

It is to be noted that operations 42 to 44 need to be performed in a loop until the attribute residual of each point in the point cloud is obtained through decoding (that is, it is continued to determine the attribute data of the next current point in the point cloud until all points in the point cloud are decoded).

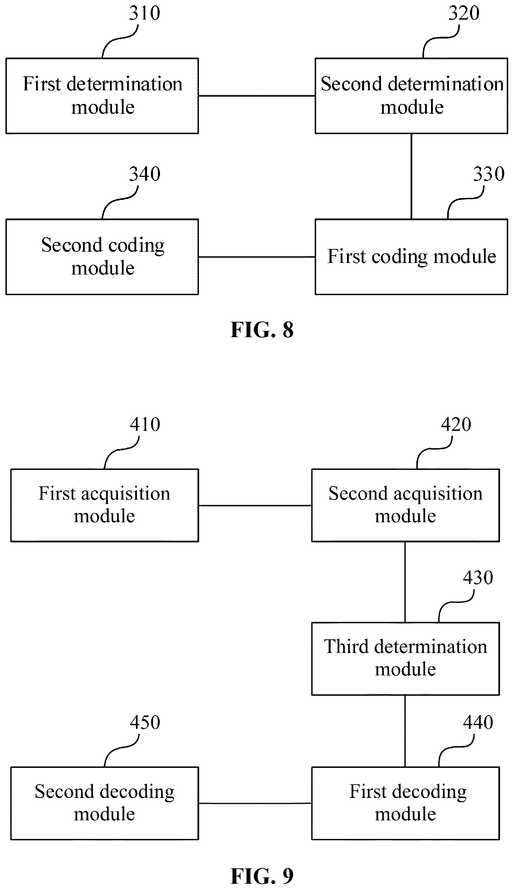

An embodiment of the present application further provides a coding apparatus. FIG. 8 is a structural diagram of a coding apparatus according to an embodiment. As shown in FIG. 8, the coding apparatus includes a first determination module 310, a second determination module 320, a first coding module 330, and a second coding module 340.

The first determination module 310 is configured to determine to-be-coded attribute data of attribute information of a point cloud.

The second determination module 320 is configured to determine a coding order of a current point in the point cloud.

The first coding module 330 is configured to code to-be-coded attribute data of the current point according to the coding order.

The second coding module 340 is configured to continue to determine a coding order of a next current point in the point cloud and code to-be-coded attribute data of a next current point until all points in the point cloud are coded to obtain coded attribute data.

The coding apparatus in this embodiment codes the to-be-coded attribute data of the determined attribute information of each point through the determined coding order of each point in the point cloud so that each point in the point cloud corresponds to a suitable coding order for coding, and the problems such as low coding performance caused by using the fixed order for coding can be avoided, thereby effectively improving the coding flexibility and performance.

In an embodiment, one coding order is provided.

In an embodiment, the first coding module 330 includes a first coding unit.

The first coding unit is configured to code the to-be-coded attribute data of the attribute information of the current point using a corresponding coding order.

In an embodiment, at least two coding orders are provided.

In an embodiment, the first coding module 330 includes a second coding unit.

The second coding unit is configured to code the to-be-coded attribute data of each attribute component of the attribute information of the current point using a respective coding order.

In an embodiment, the second determination module 320 includes a first order determination unit.

The first order determination unit is configured to determine the coding order according to feature information of the current point in the point cloud.

In an embodiment, the second determination module 320 includes a second order determination unit.

The second order determination unit is configured to determine the coding order of the current point according to the attribute information of the current point and/or attribute information of a point associated with the current point in the point cloud.

In an embodiment, the second order determination unit includes a first array determination subunit and a first order determination subunit.

The first array determination subunit is configured to determine an attribute array corresponding to the current point according to the attribute information of the current point and/or the attribute information of the point associated with the current point in the point cloud.

The first order determination subunit is configured to determine the coding order of the current point according to the attribute array.

In an embodiment, the first order determination subunit is configured to perform the following:

In the case where the number of elements in the attribute array is less than a set threshold, an initial order is determined as the coding order.

In the case where the number of elements in the attribute array is greater than or equal to the set threshold, the coding order is determined according to values of the elements in the attribute array.

In an embodiment, that the coding order is determined according to the values of the elements in the attribute array includes the following:

The coding order is determined based on an average value of the values of the elements in the attribute array.

In an embodiment, the attribute information of the current point corresponds to one attribute array.

In an embodiment, the attribute array includes one or more of the following:

an attribute value of the attribute information; or

an attribute residual of the attribute information.

In an embodiment, at least one attribute component of the attribute information of the current point corresponds to one attribute array.

In an embodiment, the attribute array includes one or more of the following:

    an attribute value of an attribute component; or

    an attribute residual of the attribute component.

The coding apparatus provided in this embodiment and the coding method provided in the preceding embodiments belong to the same concept. For technical details not described in detail in this embodiment, reference may be made to any one of the preceding embodiments, and this embodiment has the same beneficial effects as the coding method performed.

An embodiment of the present application further provides a decoding apparatus. FIG. 9 is a structural diagram of a decoding apparatus according to an embodiment. As shown in FIG. 9, the decoding apparatus includes a first acquisition module 410, a second acquisition module 420, a third determination module 430, a first decoding module 440, and a second decoding module 450.

The first acquisition module 410 is configured to acquire coded attribute data of a point cloud.

The second acquisition module 420 is configured to acquire coded attribute data of a current point in the point cloud.

The third determination module 430 is configured to determine a coding order corresponding to the coded attribute data of the current point.

The first decoding module 440 is configured to decode the coded attribute data of the current point based on the coding order to obtain attribute data of the current point.

The second decoding module 450 is configured to continue to determine attribute data of a next current point in the point cloud until all points in the point cloud are decoded.

The decoding apparatus in this embodiment decodes the coded attribute data of the current point based on the determined coding order corresponding to the coded attribute data of the current point, the apparatus can decode the coded attribute data of each point in the point cloud using the corresponding coding order, and the problems such as low decoding performance caused by using the fixed order for decoding can be avoided, thereby effectively improving the decoding flexibility and performance.

In an embodiment, one coding order is provided.

In an embodiment, the first decoding module 440 includes a first decoding unit.

The first decoding unit is configured to decode the coded attribute data of the current point based on the coding order to obtain the attribute data of the current point.

In an embodiment, at least two coding orders are provided.

In an embodiment, the first decoding module 440 further includes a second decoding unit.

The second decoding unit is configured to, for each coding order, decode the coded attribute data of the current point based on the respective coding order to obtain attribute data of an attribute component corresponding to the respective coding order among attribute components of the current point.

In an embodiment, the third determination module 430 includes a third order determination unit.

The third order determination unit is configured to determine the coding order of the current point according to the coded attribute data of the current point and/or coded attribute data of a point associated with the current point in the point cloud.

In an embodiment, the third order determination unit includes a second array determination subunit and a second order determination subunit.

The second array determination subunit is configured to determine an attribute array corresponding to the current point according to the coded attribute data of the current point and/or the coded attribute data of the point associated with the current point in the point cloud.

The second order determination subunit is configured to determine the coding order of the current point based on the attribute array.

In an embodiment, the coded attribute data of attribute information of the current point corresponds to one attribute array.

In an embodiment, the attribute array includes one or more of the following:

    an attribute value of the attribute information; or

    an attribute residual of the attribute information.

In an embodiment, the coded attribute data of at least one attribute component of attribute information of the current point corresponds to one attribute array.

In an embodiment, the attribute array includes one or more of the following:

    an attribute value of an attribute component; or

    an attribute residual of the attribute component.

In an embodiment, the third determination module 430 includes a fourth order determination unit.

The fourth order determination unit is configured to determine the coding order corresponding to the coded attribute data of the current point according to the feature information of the current point in the point cloud.

In an embodiment, that the coding order of the current point is determined based on the attribute array includes the following:

In the case where the number of elements in the attribute array is less than a set threshold, an initial order is determined as the coding order.

In the case where the number of elements in the attribute array is greater than or equal to the set threshold, the coding order is determined according to values of the elements in the attribute array.

In an embodiment, that the coding order is determined according to the values of the elements in the attribute array includes the following:

The coding order is determined based on an average value of the values of the elements in the attribute array.

The decoding apparatus provided in this embodiment and the decoding method provided in the preceding embodiments belong to the same concept. For technical details not described in detail in this embodiment, reference may be made to any one of the preceding embodiments, and this embodiment has the same beneficial effects as the decoding method performed.

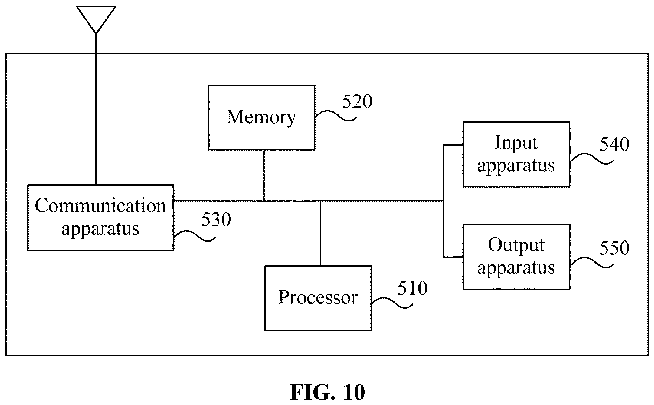

An embodiment of the present application further provides a communication node. FIG. 10 is a structural diagram of the hardware of a communication node according to an embodiment. As shown in FIG. 10, the communication node provided in the present application may include a first terminal, a second terminal, and a third terminal, the communication node includes a memory 520, a processor 510, and a computer program stored in the memory and executable by the processor. The processor 510, when executing the program, performs the preceding coding method or decoding method.

The communication node may further include the memory 520. One or more processors 510 may be provided in the communication node, and one processor 510 is shown as an example in FIG. 10. The memory 520 is configured to store one or more programs; the one or more programs are executed by the one or more processors 510 to cause the one or more processors 510 to perform the coding method or the decoding method in the embodiments of the present application.

The communication node further includes a communication apparatus 530, an input apparatus 540, and an output apparatus 550.

The processor 510, the memory 520, the communication apparatus 530, the input apparatus 540, and the output apparatus 550 in the communication node may be connected through a bus or in other manners. The connection through a bus is used as an example in FIG. 10.

The input apparatus 540 may be configured to receive inputted digital or character information and generate key signal input related to user settings and function control of the communication node. The output apparatus 550 may include a display device such as a display screen.

The communication apparatus 530 may include a receiver and a sender. The communication apparatus 530 is configured to perform information transceiving communication under the control of the processor 510.

As a computer-readable storage medium, the memory 520 may be configured to store software programs, computer-executable programs, and modules, such as program instructions/modules corresponding to the coding method or the decoding method in the embodiments of the present application (for example, the first determination module 310, the second determination module 320, the first coding module 330, and the second coding module 340 in the coding apparatus, or the first acquisition module 410, the second acquisition module 420, the third determination module 430, the first decoding module 440, and the second decoding module 450 in the decoding apparatus). The memory 520 may include a program storage region and a data storage region, where the program storage region may store an operating system and an application program required by at least one function, and the data storage region may store data or the like created according to the use of the communication node. Additionally, the memory 520 may include a high-speed random-access memory and may also include a nonvolatile memory, such as at least one magnetic disk memory, a flash memory, or another nonvolatile solid-state memory. In some examples, the memory 520 may further include memories located remotely relative to the processors 510, and these remote memories may be connected to the communication node via a network. Examples of the preceding network include, but are not limited to, the Internet, an intranet, a local area network, a mobile communication network, and a combination thereof.

An embodiment of the present application provides a storage medium. The storage medium stores a computer program which, when executed by a processor, causes the processor to perform the coding method or the decoding method according to any embodiment of the present application.

The coding method includes the following: determining to-be-coded attribute data of attribute information of the point cloud; determining a coding order of a current point in the point cloud; coding to-be-coded attribute data of the current point according to the coding order; and continuing to determine a coding order of a next current point in the point cloud, and coding to-be-coded attribute data of a next current point until all points in the point cloud are coded to obtain coded attribute data.

The decoding method includes the following: acquiring coded attribute data of the point cloud; acquiring coded attribute data of a current point in the point cloud; determining a coding order corresponding to the coded attribute data of the current point; decoding the coded attribute data of the current point based on the coding order to obtain attribute data of the current point; and continuing to determine attribute data of a next current point in the point cloud until all points in the point cloud are decoded.

A computer storage medium in an embodiment of the present application may adopt any combination of one or more computer-readable media. The computer-readable media may be computer-readable signal media or computer-readable storage media. For example, a computer-readable storage medium may be, but is not limited to, an electrical, magnetic, optical, electromagnetic, infrared, or semiconductor system, apparatus, or device or any combination thereof. More specific examples of the computer-readable storage medium include (non-exhaustive list): an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc ROM (CD-ROM), an optical memory, a magnetic memory, or any suitable combination thereof. The computer-readable storage medium may be any tangible medium including or storing a program. The program may be used by or used in conjunction with an instruction execution system, apparatus, or device.

A computer-readable signal medium may include a data signal propagated in a baseband or as part of a carrier. The data signal carries computer-readable program codes. The data signal propagated in this manner may be in multiple forms, including, but not limited to, an electromagnetic signal, an optical signal, or any suitable combination thereof. The computer-readable signal medium may also be any computer-readable medium other than the computer-readable storage medium. The computer-readable medium may send, propagate, or transmit a program used by or used in conjunction with an instruction execution system, apparatus, or device.

The program codes included in the computer-readable medium may be transmitted in any suitable medium including, but not limited to, a wireless medium, a wire, an optical cable, radio frequency (RF), or any suitable combination thereof.

Computer program codes for performing the operations of the present application may be written in one or more programming languages or a combination thereof. The programming languages include object-oriented programming languages such as Java, Smalltalk, and C++ and may further include conventional procedural programming languages such as "C" or similar programming languages. The program codes may be executed entirely on a user computer, executed partly on a user computer, executed as a stand-alone software package, executed partly on a user computer and partly on a remote computer, or executed entirely on a remote computer or a server. In the case where the remote computer is involved, the remote computer may be connected to the user computer through any type of network including a local area network (LAN) or a wide area network (WAN) or may be connected to an external computer (for example, via the Internet provided by an Internet service provider).

The preceding are only example embodiments of the present application and are not intended to limit the scope of the present application.

It is to be understood by those skilled in the art that the term "user terminal" encompasses any suitable type of radio user device, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

The embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM) and an optical memory device and system (a digital video disc (DVD) or a compact disc (CD)). The computer-readable media may include non-transitory storage media. The data processor may be of any type suitable for the local technical environment, such as, but not limited to, a general-purpose computer, a special-purpose computer, a microprocessor, a digital signal processing (DSP), an application-specific integrated circuit (ASIC), a field-programmable gate array (FPGA) and a processor based on a multi-core processor architecture.

**Claims**

1. A coding method, comprising:

   determining to-be-coded attribute data of attribute information of a point cloud;
   determining a coding order of a current point in the point cloud;
coding to-be-coded attribute data of the current point according to the coding order; and
continuing to determine a coding order of a next current point in the point cloud, and coding to-be-coded attribute data of the next current point until all points in the point cloud are coded to obtain coded attribute data.

2. The method of claim 1, wherein one coding order is provided.

3. The method of claim 2, wherein coding the to-be-coded attribute data of the current point according to the coding order comprises:
coding the to-be-coded attribute data of the attribute information of the current point using the one coding order.

4. The method of claim 1, wherein at least two coding orders are provided.

5. The method of claim 4, wherein coding the to-be-coded attribute data of the current point according to the coding order comprises:
coding to-be-coded attribute data of each of a plurality of attribute components of the attribute information of the current point using a respective coding order of the at least two coding orders.

6. The method of claim 1, wherein determining the coding order of the current point in the point cloud comprises:
determining the coding order according to feature information of the current point in the point cloud.

7. The method of claim 1, wherein determining the coding order of the current point in the point cloud comprises:
determining the coding order of the current point according to at least one of attribute information of the current point or attribute information of a point associated with the current point in the point cloud.

8. The method of claim 7, wherein determining the coding order of the current point according to the at least one of the attribute information of the current point or the attribute information of the point associated with the current point in the point cloud comprises:

determining an attribute array corresponding to the current point according to the at least one of the attribute information of the current point or the attribute information of the point associated with the current point in the point cloud; and
determining the coding order of the current point according to the attribute array.

9. The method of claim 8, wherein determining the coding order of the current point according to the attribute array comprises:

in response to determining that a number of elements in the attribute array is less than a set threshold, determining an initial order as the coding order; and
in response to determining that the number of elements in the attribute array is greater than or equal to the set threshold, determining the coding order according to values of the elements in the attribute array.

10. The method of claim 9, wherein determining the coding order according to the values of the elements in the attribute array comprises:
determining the coding order based on an average value of the values of the elements in the attribute array.

11. The method of claim 8, wherein the attribute information of the current point corresponds to one attribute array.

12. The method of claim 11, wherein the attribute array comprises at least one of the following:

an attribute value of the attribute information; or
an attribute residual of the attribute information.

13. The method of claim 8, wherein at least one attribute component of the attribute information of the current point corresponds to one attribute array.

14. The method of claim 13, wherein the attribute array comprises at least one of the following:

an attribute value of the at least one attribute component; or
an attribute residual of the at least one attribute component.

15. A decoding method, comprising:

acquiring coded attribute data of a point cloud;
acquiring coded attribute data of a current point in the point cloud;
determining a coding order corresponding to the coded attribute data of the current point;
decoding the coded attribute data of the current point based on the coding order to obtain attribute data of the current point; and
continuing to determine attribute data of a next current point in the point cloud until all points in the point cloud are decoded.

16. The method of claim 15, wherein one coding order is provided.

17. The method of claim 16, wherein decoding the coded attribute data of the current point based on the coding order to obtain the attribute data of the current point comprises:
decoding the coded attribute data of the current point based on the coding order to obtain the attribute data of the current point.

18. The method of claim 15, wherein at least two coding orders are provided.

19. The method of claim 18, wherein decoding the coded attribute data of the current point based on the coding order to obtain the attribute data of the current point comprises:
for each of the at least two coding orders, decoding the coded attribute data of the current point based on the respective coding order to obtain attribute data of an attribute component corresponding to the respective coding order among attribute components of the current point.

20. The method of claim 15, wherein determining the coding order corresponding to the coded attribute data of the current point comprises:
determining the coding order of the current point according to at least one of the coded attribute data of the current point or coded attribute data of a point associated with the current point in the point cloud.

21. The method of claim 20, wherein determining the coding order of the current point according to the coded attribute data of the current point and the coded attribute data of the point associated with the current point in the point cloud comprises:

determining an attribute array corresponding to the current point according to the at least one of the coded attribute data of the current point or the coded attribute data of the point associated with the current point in the point cloud; and determining the coding order of the current point based on the attribute array.

22. The method of claim 21, wherein the coded attribute data of attribute information of the current point corresponds to one attribute array.

23. The method of claim 21, wherein coded attribute data of at least one attribute component of attribute information of the current point corresponds to one attribute array.

24. A communication node, comprising:
a memory, a processor, and a computer program stored in the memory and executable by the processor, wherein the processor, when executing the program, performs the method of any one of claims 1 to 23.

25. A storage medium storing a computer program which, when executed by a processor, causes the processor to perform the method of any one of claims 1 to 23.

**FIG. 1**

110

Determine to-be-coded attribute data of attribute information of a point cloud

120

Determine a coding order of a current point in the point cloud

130

Code to-be-coded attribute data of the current point according to the coding order

140

Continue to determine a coding order of a next current point in the point cloud, and code to-be-coded attribute data of the next current point until all points in the point cloud are coded to obtain coded attribute data

**FIG. 2**

11

Predict attribute information of the point cloud and generate an attribute residual

12

Acquire the attribute residual and feature information of the current point

13

Determine a coding order K according to the feature information of the current point

14

Perform exponential-Golomb coding on the attribute residual of the current point according to the coding order K

**FIG. 3**

```
                                              ┌─ 21
        ┌─────────────────────────────────────────────┐
        │  Predict attribute information of the point cloud and  │
        │        generate an attribute residual         │
        └─────────────────────────────────────────────┘
                          │
                          ▼               ┌─ 22
        ┌─────────────────────────────────────────────┐
   ┌───▶│ Acquire the attribute residual and feature information │
   │    │            of the current point             │
   │    └─────────────────────────────────────────────┘
   │                      │
   │                      ▼          ┌─ 23
   │    ┌─────────────────────────────────────────────┐
   │    │    Acquire an array corresponding to the attribute    │
   │    │   information according to the feature information    │
   │    └─────────────────────────────────────────────┘
   │                      │
   │                      ▼                      ┌─ 24
   │              ◇─────────────────────────────────◇
   │            ╱   Determine Whether               ╲
   │           ╱  the number of elements in the array reaches ╲
   │           ╲         the threshold N            ╱
   │            ◇─────────────────────────────────◇
   │              │                             │
   │         Yes  │   ┌─ 25                     │             ┌─ 27
   │    ┌──────────────────────────┐   ┌──────────────────────────┐
   │    │ Calculate the order k1 according │   │    Use k1ᵗʰ-order exponential-   │
   │    │  to the values of the elements in │   │  Golomb coding for the attribute │
   │    │            the array             │   │    residual of the current point │
   │    └──────────────────────────┘   └──────────────────────────┘
   │                 │   ┌─ 26                          │
   │    ┌──────────────────────────┐                    │
   │    │    Use k1ᵗʰ-order exponential-  │                    │
   │    │  Golomb coding for the attribute │                    │
   │    │   residual of the current point  │                    │
   │    └──────────────────────────┘                    │
   │                 │                                  │
   │                 ▼                      ┌─ 28       │
   │          ◇─────────────────────────────────◇      │
   │   No    ╱      Determine whether              ╲◀───┘
   └────────╱  the current point is the last point in the ╲
            ╲     traversed point cloud sequence    ╱
             ◇─────────────────────────────────◇
                          │ Yes
                          ▼
                   ┌───────────┐
                   │    End     │
                   └───────────┘
```

**FIG. 4**

**FIG. 5**

210

Acquire coded attribute data of a point cloud

220

Acquire coded attribute data of a current point in the point cloud

230

Determine a coding order corresponding to the coded attribute data of the current point

240

Decode the coded attribute data of the current point based on the coding order to obtain attribute data of the current point

250

Continue to determine attribute data of a next current point in the point cloud until all points in the point cloud are decoded

**FIG. 6**

41

Acquire a coded attribute residual of the attribute information of the point cloud after coding

42

Acquire a coded attribute residual and feature information of the current point

43

Determine a coding order corresponding to the coded attribute residual of the current point according to the feature information of the current point

44

Decode the coded attribute residual based on the coding order

**FIG. 7**

310

First determination
module

320

Second determination
module

340

Second coding
module

330

First coding module

**FIG. 8**

410

First acquisition
module

420

Second acquisition
module

430

Third determination
module

450

Second decoding
module

440

First decoding
module

**FIG. 9**

**FIG. 10**

## INTERNATIONAL SEARCH REPORT

| International application No. |
|---|
| **PCT/CN2023/090000** |

**A. CLASSIFICATION OF SUBJECT MATTER**

H04N 19/136(2014.01)i; H04N 13/161(2018.01)i

According to International Patent Classification (IPC) or to both national classification and IPC

**B. FIELDS SEARCHED**

Minimum documentation searched (classification system followed by classification symbols)

IPC:H04N

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, ENTXT, WPABS: 点云, 三维, 属性, 特征, 分量, 数组, 哥伦布, 阶数, 阶次, point cloud, three-dimension, attribute, component, array, Golomb, order

**C. DOCUMENTS CONSIDERED TO BE RELEVANT**

| Category* | Citation of document, with indication, where appropriate, of the relevant passages | Relevant to claim No. |
|---|---|---|
| X | CN 111247798 A (SZ DJI TECHNOLOGY CO., LTD.) 05 June 2020 (2020-06-05) description, paragraphs [0039]-[0040], [0042]-[0043], [0077]-[0078], [0081], [0122]-[0123], and [0230]-[0237] | 1-6, 15-19, 24-25 |
| Y | CN 111247798 A (SZ DJI TECHNOLOGY CO., LTD.) 05 June 2020 (2020-06-05) description, paragraphs [0039]-[0040], [0042]-[0043], [0077]-[0078],[0081], [0122]-[0123], [0230]-[0237] | 7-14, 20-23 |
| Y | CN 113796014 A (TENCENT AMERICA LLC) 14 December 2021 (2021-12-14) description, paragraphs [0131]-[0133] and [0127] | 7-14, 20-23 |
| A | CN 111405281 A (PEKING UNIVERSITY SHENZHEN GRADUATE SCHOOL) 10 July 2020 (2020-07-10) entire document | 1-25 |
| A | US 2021092355 A1 (PANASONIC INTELLECTUAL PROPERTY CORP. OF AMERICA) 25 March 2021 (2021-03-25) entire document | 1-25 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **04 August 2023** | **07 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/090000**

| Patent document cited in search report | | | Publication date (day/month/year) | Patent family member(s) | | | Publication date (day/month/year) |
|---|---|---|---|---|---|---|---|
| CN | 111247798 | A | 05 June 2020 | WO | 2020143005 | A1 | 16 July 2020 |
| | | | | US | 2021335016 | A1 | 28 October 2021 |
| CN | 113796014 | A | 14 December 2021 | JP | 2022530765 | A | 01 July 2022 |
| | | | | EP | 4128540 | A1 | 08 February 2023 |
| | | | | US | 2022210472 | A1 | 30 June 2022 |
| | | | | WO | 2021202003 | A1 | 07 October 2021 |
| | | | | AU | 2021246918 | A1 | 18 November 2021 |
| | | | | AU | 2021246918 | B2 | 02 March 2023 |
| | | | | KR | 20210144880 | A | 30 November 2021 |
| | | | | CA | 3137933 | A1 | 07 October 2021 |
| | | | | US | 2021306664 | A1 | 30 September 2021 |
| | | | | US | 11317117 | B2 | 26 April 2022 |
| | | | | SG | 11202111636 | XA | 29 November 2021 |
| CN | 111405281 | A | 10 July 2020 | None | | | |
| US | 2021092355 | A1 | 25 March 2021 | None | | | |

Form PCT/ISA/210 (patent family annex) (July 2022)